# EUROPEAN PATENT APPLICATION

(11) **EP 1 717 749 A1**
(43) Date of publication of application: **02.11.2006**
(21) Application number: 06101673.9
(22) Date of filing: 14.02.2006
(51) Int. Cl.: G06Q 30/00

(54) **Self-checkout**

(30) Priority: 19.04.2005 EP 05300292
(71) Applicant: International Business Machines Corporation, Armonk, N.Y. 10504 (US)
(72) Inventor: Gibault, Dimitris, 06800, Cagnes sur mer (FR)
(74) Representative: Etorre, Yves Nicolas

(57) **Abstract**

The present invention relates to a self check-out system which uses contact free tags embedded in a receptacle, e.g. a plate, glass etc. The system relates the tag to a service area and uses that relationship to associate the receptacle with a charge to be made to a customer.

## Description

### Field of Invention

This invention is directed to self check out systems, particularly but not exclusively to improvements relating to the check out capabilities of a retail establishment.

### Background Art

In many establishments including retail food establishments, and in particularly cafeterias, it is not uncommon to queue for some time in order to pay for goods or a meal. In most establishments there is a cashier who reviews all the items selected and prepares the bills. The goods may then be paid for using cash, or in some establishment if the customer has an account, they may pay using an account.

The later payment solution is most common in establishments provided by employers for their employees, where the employees have an employee number and an identification card, which can be used to facility payment for the goods. Credit details may be associated with the identification card and can be topped up from time to time via known means. However, there may still be considerable waiting time and delays produced in most establishments since the cashier still has to review all the items selected by the customer.

### Object of the Invention

One of the objects of the present invention is to provide a self check out system (SCO System) which overcomes at least some of the problems associated with the prior art systems.

### Summary of the Invention

The present invention is directed to a method and system as defined in the independent claims.

More particularly the present invention discloses a method of providing a self checkout facility for a catering establishment comprising:
reading the content of a tag embedded in a receptacle;
associating in a database the information in the tag with a serving area from which the receptacle was taken;
determining a charge for the content of the receptacle from the said database association;
charging a customer for the content.

Further embodiments of the invention are provided in the appended claims.

Advantages of this invention are set out in detail in the description.

Particular it is possible to manufacture all receptacles to be the same, this means that the manufacturing process costs can be minimised.

There will need to be less human resources overheads and resources in an establishment using this type of model, which will again give further cost saving and efficiency benefits.

Other advantages and aspects of the invention can be seen in the accompanying claims and description.

### Reference to the drawings

Reference will now be made by way of example, to the accompanying drawings, in which:
Figure 1 is a diagram showing how the overall system of self check out for a retail food establishment may be implemented.
Figure 2 is a figure illustrating how the self check out system of Figure 1 may identify articles and items selected by a customer and so as to enable a payment.

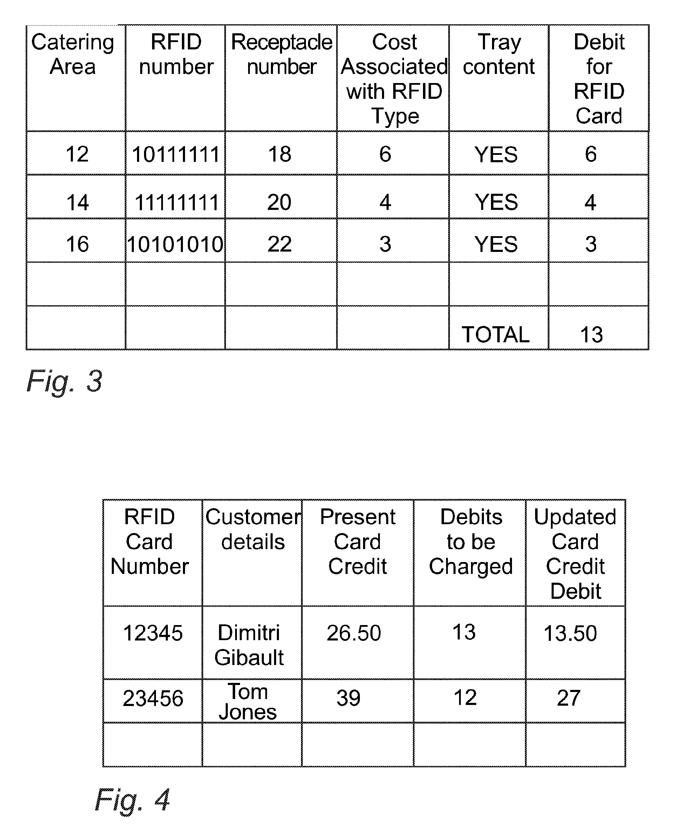

Figure 3 is a table which shows an example of information, which may be stored on the database 125 of Figure 1.
Figure 4 is a table which shows information relating to an RFID card associated with specific customers and includes information identifying card credit levels both before and after a charge has been made.

### Detailed Description

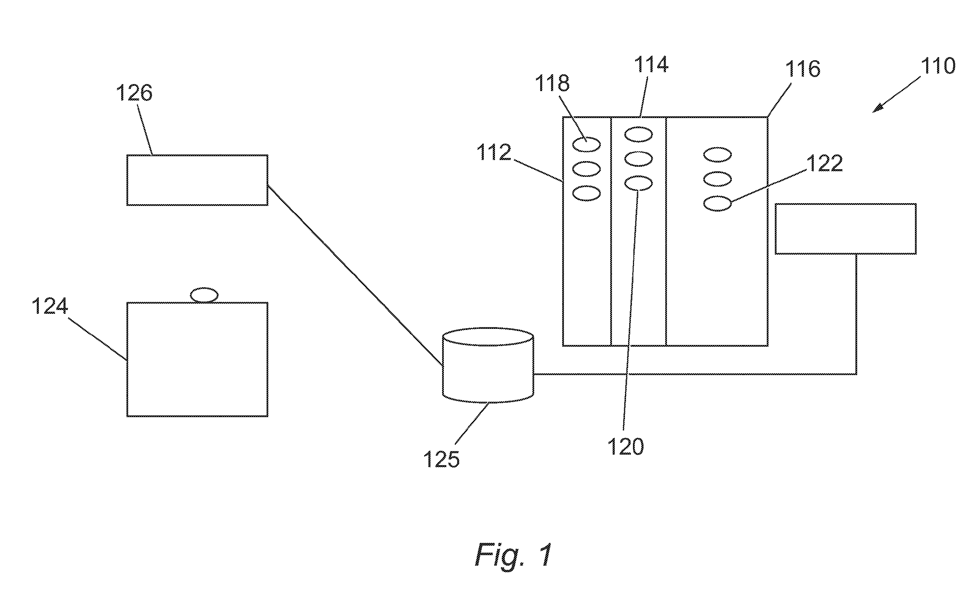

Referring initially to Figure 1, a self check out (SCO) system 110, for a retail food and/or drink establishment is shown.

Three separate serving areas 112, 114 and 116 are shown. In each area there are a number of receptacles each including a unique tag, (not shown). The unique tag may take the form of any tag which can be read without contact and in particular may include a radio frequency identification chip (RFID chip).

For ease of this description only, one receptacle in area 112 is given the number 118, one in area 114 is given the number 120 and one in area 116 the number 122. The numbers will be used later to describe other features of the invention, but in fact each receptacle in a given establishment includes a unique RFID chip and is similarly unique.

The content of the receptacle is dictated by and associated with the area from which the receptacle is selected or chosen. The content may be a meal, snack, drink or other item to be selected by a customer. Each receptacle may be the same or different from other receptacles in the same area, but as previously indicated each one has a unique tag embedded within the material thereof.

For the purposes of this invention the term embedded is intended to include any article which forms an integral or substantially integral part of the material of the receptacle. It may include a tag or RFID chip which is partly embedded or attached to the surface and then sealed thereto by an appropriate member or material, or something that is fully embedded in the material of the receptacle.

Prior to service in the establishment the food and/or drink and the receptacles are laid out. For each service area the identity of each receptacle within that area is determined by suitable means, for example, an RFID chip reader. In other words the RFID chip for each receptacle is associated with a service area and thus a content and/or content price.

Later when the customer enters the establishment, the customer may select a tray and then visit various service areas and select a receptacle from one or more thereof.

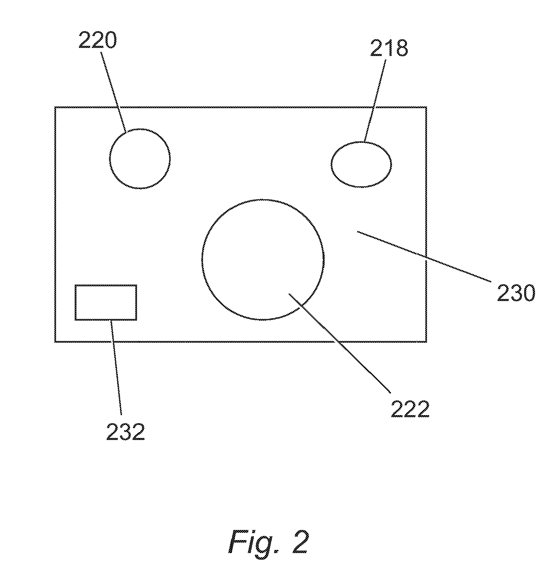

Having selected one or more plates of food and/ or drink, the customer may then advance to the self check out station 124. The self check out station 124 includes a RFID reader 126, the RFID reader scans the tray 230 (See Figure 2) and identifies that the tray is carrying plates 218, 220 and 222 corresponding to 118, 120 and 122 respectively. If the establishment also provides provisions of a service whereby a customer ID is used to facility payment the RFID reader may also read a RFID identification element (e.g. an RFID card) 232 which may also be placed on the tray or around the neck or the customer.

Once the RFID reader has read the RFID information associated with everything on the tray (in this case plates 218, 220, 222 and RFID card 232), this information can be used to determine the cost to be charged to the customer either in cash or credit associated with the RFID card as described below.

Referring once again to Figure 1, a database 125 is also shown. The following description describes how the database functions to enable RFID chips information read by the RFID reader to be used to determine the cost for the customer.

Table 1 below shows an example of information, which may be stored on the database 125. The table contains information relating to a catering area (112, 114, 116); receptacle RFID chip number (and thus identify receptacles 118, 120, 122 in this example); cost associated with catering area; tray content indicators and any requirement for debiting the customer. If the RFID reader 126 identifies a specific RFID on the tray, a calculation can be made of how much a customer should be debited on his RFID card or should pay if no RFID card exists.

Table 1 may include a different set of information depending on the relevant establishment, as long as there is an association between the receptacle or RFID number and the location from which the receptacle was selected. This can then be used to determine the cost to be charged to a customer. In addition, different establishments may also include the facility to have the weight of a full or semi-full receptacle determined and charge the customer in accordance with the weight and the cost per kilo. An example of when this might occur is in a sushi bar or a salad bar type establishment.

Table 2 shows information relating to an RFID card associated with specific customers and includes information identifying card credit levels both before and after a charge has been made.

As with Table 1, the content of Table 2 may vary in accordance with the specific need of a given establishment. Also, as previously mentioned, some establishments may prefer different methods of customers paying for their goods, for example cash or credit/debit cards. The system of the invention would in such cases be adapted accordingly.

It would be obvious to the person skilled in the art that the database can be configured in many different manners depending on the type of product that is being sold to customers and the payment method. In addition, there may be considerably more receptacles and thus RFID chip numbers, more service areas and as many RFID cards numbers as are necessary. Also other parameters may be stored and used to determine the cost to the customer.

The description relates specifically to a eating and/or drinking establishment where customers are taking food or drink from specific catering areas. However, this invention could be used in other situations where customers are selecting receptacle contents from certain areas and the paying for them with a self check out system which is based on the receptacle and its association with the service area, rather than on the content per se.

In the event that the system does not provide for the existence of an RFID card associated with the customer the RFID reader may generate a bill which the cashier may read in order to obtain a payment from the costumer.

In circumstances where an RFID card does exist and a credit on the card or database is less than the debit to be charged the database and the checkout system will prevent the customer being able to complete the self check out process and return the customer to another station "to recharge the RFID card".

The charges made using an RFID card may be written to the DB or directly to the card and may be paid for through the wages process for example.

As previously indicated the RFID chip is embedded within the container rather than associated with the content of the container. This has a number of advantages. As the RFID chip is included in the structure of the container, (for example a plate) the RFID chip can be reused many times. Since the chip is embedded within the material of the container, the container may also be washed. This means that the RFID chip costs are kept to a minimum and any plate can be used for any service area from one day to the next.

Other advantages of the invention include the ability to merge the check out and payment processes for a customer using RFID related information. In addition, when a container is manufactured with the simple and unique RFID tag, it can be associated with a different price base depending on the catering facility or restaurant for which the container is to be used. This facilitates ease of manufacture and reduces the cost for producing plates with tags embedded therein.

It will be clear that the material of the receptacle can be any appropriate material, for example, china, porcelain, glass, plastic, ceramics, etc.

It should be noted that the present invention has required all the RFID chips to be read only, but it would be possible to provide a system with read/write chips which could be programmed with different information. For example plate number 120 is associated today with area 114 and the chip in this plate may have the price of the food from that area written thereto, to enable charging at the self check out.

As previously noted this invention make use of RFID chip technology but future evolutions of any other contact-free tag and reading system are also intended to be covered by this invention.

For the purposes of this invention a catering establishment is any establishment which supplies food and drink to customers.

## Claims

1. A method of providing a self checkout facility for a catering establishment comprising:
reading the content of a tag embedded in a receptacle;
associating in a database the information in the tag with a serving area from which the receptacle was taken;
determining a charge for the content of the receptacle from the said database association;
charging a customer for the content.

2. The method of claim 1, further comprising reading the tag on the receptacle as it is placed in the serving area, thereby associating one with the other.

3. The method of claim 1 or claim 2, further comprising providing the tag as an RFID chip.

4. The method of any preceding claim, further comprising associating in the database the tag content for a plurality of receptacles and associating each with the serving area it is to be used in.

5. The method of any preceding claim, further comprising at a checkout point reading all tags on a tray and determining the total cost to be charged to a customer.

6. The method of any preceding claim, further comprising:
reading an customer tag to determine a customer credit level;
deducting the price of the goods from the customer credit level;
determining and storing a new customer credit level.

7. The method of claim 6, further comprising providing the customer tag as an RFID card.

8. A system comprising means adapted to carry out the steps of the method according to any one of the preceding claims.

9. A computer program comprising instructions for carrying out the steps of the method according to any one of claims 1 to 7 when said computer program is executed on a computer.

10. A receptacle including a tag embedded therein, wherein the tag can be read by a contact-free reader and the tag can be associated with a serving area to determine the cost to be charged to a customer.

11. A tag adapted to be embedded in a receptacle, wherein the tag can be read by contact-free reading means and such that a customer can be charged for a product contained in the receptacle by association with a serving area to determine the cost to be charged to a customer.

12. The tag of claim 11, in the form of an RFID chip.
